(19) Europäisches Patentamt
European Patent Office
Office européen des brevets

(11) **EP 2 905 680 B1**

(12) **EUROPEAN PATENT SPECIFICATION**

(45) Date of publication and mention of the grant of the patent:
**02.08.2017 Bulletin 2017/31**

(51) Int Cl.:
***G06F 3/01*** *(2006.01)*

(21) Application number: **15150949.4**

(22) Date of filing: **13.01.2015**

(54) **Information processing apparatus, information processing method, and program**

Informationsverarbeitungsvorrichtung, Informationsverarbeitungsverfahren und Programm

Appareil et procédé de traitement d'informations et programme

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.02.2014 JP 2014023300**

(43) Date of publication of application:
**12.08.2015 Bulletin 2015/33**

(73) Proprietor: **Sony Corporation**
**Tokyo 108-0075 (JP)**

(72) Inventors:
• **Watanabe, Sayaka**
**Tokyo, 108-0075 (JP)**
• **Noda, Takuro**
**Tokyo, 108-0075 (JP)**
• **Nomura, Eisuke**
**Tokyo, 108-0075 (JP)**
• **Yamamoto, Kazuyuki**
**Tokyo, 108-0075 (JP)**
• **Suzuki, Seiji**
**Tokyo, 108-0075 (JP)**

(74) Representative: **MFG Patentanwälte**
**Meyer-Wildhagen Meggle-Freund**
**Gerhard PartG mbB**
**Amalienstraße 62**
**80799 München (DE)**

(56) References cited:
**US-A1- 2010 165 093**

## Description

### BACKGROUND

The present disclosure relates to an information processing apparatus, an information processing method, and a program.

A technology for detecting a sight line of a person, for example, projects an infrared light or the like on an eyeball of a user, and detects the sight line from the pupil center and the corneal curvature center obtained from the position of the reflected image on the corneal surface. This technology is utilized to determine the position that the user gazes at on a display screen.

In the meantime, an error sometimes occurs between the position on the display which is determined by the sight line detected by utilizing the reflected image in the corneal surface, and the position that the user actually gazes at. In order to correct this error, the sight line calibration is executed to calculate a correction coefficient for compensating the error (refer to JP 2012-65781A).

From US patent application publication US 2010/0165093 A1 an eye gaze detecting device is known. It detects an eye-gaze coordinate of a user in an input image from a capturing unit. It includes an eye movement detecting unit detecting an eye movement of the user, and a calibration object detecting unit. The calibration object detecting unit receives the input image, determines whether or not there is an object available as calibration object in the input image, and provides a position coordinate indicating a position of the object in the case where the available object is determined to be included in the input image. A voice instructing unit provides an instruction to the user to look at the calibration object indicated in the position coordinate. A calibration parameter calculating unit calculates a calibration parameter with a use of the eye movement information of the user receiving the instruction and the position coordinate of the calibration object. And a calibrating unit calibrates the eye movement information to the eye-gaze coordinate with a use of the calculated calibration parameter.

### SUMMARY

Usually, in the device capable of sight line input, an operator is not allowed to perform operation by the sight line, until sight line detection of desired accuracy relative to a display screen image is secured by calibration.

Therefore, the present disclosure proposes a method that enables the operation by the sight line to be performed appropriately in response to the detection accuracy of the sight line relative to the display screen image.

According to a first aspect, the invention provides an information processing apparatus in accordance with independent claim 1. According to a second aspect, the invention provides an information processing method in accordance with independent claim 11. According to a third aspect, the invention provides a program in accordance with independent claim 12. Further aspects of the invention are set forth in the dependent claims, the drawings and the following description.

According to an embodiment of the present disclosure, there is provided an information processing apparatus including a sight line detecting unit configured to detect a sight line of an operator on a display screen, a detection accuracy determining unit configured to determine a detection accuracy of the sight line detected by the sight line detecting unit, and a display control unit configured to differentiate a display form of a display object displayed on the display screen, depending on the detection accuracy determined by the detection accuracy determining unit.

According to another embodiment of the present disclosure, there is provided an information processing method including detecting a sight line of an operator on a display screen, determining a detection accuracy of the detected sight line, and differentiating a display form of a display object displayed on the display screen, depending on the determined detection accuracy.

According to another embodiment of the present disclosure, there is provided a program for causing a computer to execute detecting a sight line of an operator on a display screen, determining a detection accuracy of the detected sight line, and differentiating a display form of a display object displayed on the display screen, depending on the determined detection accuracy.

Various respective aspects and features of the invention are defined in the appended claims.

As described above according to the present disclosure, the operation by the sight line is performed appropriately, in response to the detection accuracy of the sight line relative to the display screen image.

### BRIEF DESCRIPTION OF THE DRAWINGS

Embodiments of the invention will now be described with reference to the accompanying drawings, throughout which like parts are referred to by like references, and in which:

FIG. 1 is a block diagram illustrating an example of a function and configuration of an information processing apparatus according to a first embodiment of the present disclosure;

FIG. 2 is a schematic diagram for describing a first collection example of a real sight line position of an operator in a display screen image;

FIG. 3 is a schematic diagram for describing a second collection example of a real sight line position of an operator in a display screen image;

FIG. 4 is a schematic diagram for describing a third collection example of a real sight line position of an operator in a display screen image;

FIG. 5 is a schematic diagram illustrating an example of a sight line detection accuracy map according to a first embodiment;

FIG. 6 is a schematic diagram illustrating an example of a sight line detection accuracy map according to a first embodiment;

FIG. 7 is a diagram illustrating an arrangement example of display objects according to a sight line detection accuracy map according to a first embodiment;

FIG. 8 is a diagram illustrating an arrangement example of display objects according to a sight line detection accuracy map according to a first embodiment;

FIG. 9 is a schematic diagram illustrating a relationship between a sight line detection accuracy and an arrangement of a display object according to a first embodiment;

FIG. 10 is a flowchart illustrating an example of an operation of an information processing apparatus according to a first embodiment;

FIG. 11 is a block diagram illustrating an example of a function and configuration of an information processing apparatus according to a second embodiment;

FIG. 12 is a schematic diagram illustrating an example of a calibration position map according to a second embodiment;

FIG. 13 is a diagram illustrating an arrangement example of display objects according to a calibration position map according to a second embodiment; and

FIG. 14 is an explanatory diagram illustrating an example of a hardware configuration of an information processing apparatus.

DETAILED DESCRIPTION OF THE EMBODIMENT(S)

Hereinafter, preferred embodiments of the present disclosure will be described in detail with reference to the appended drawings. Note that, in this specification and the appended drawings, structural elements that have substantially the same function and structure are denoted with the same reference numerals, and repeated explanation of these structural elements is omitted.

Note that description will be made in the following order.

1. Sight Line Detection and Calibration
2. First Embodiment

    2-1. Configuration of Information Processing Apparatus
    2-2. Operation of Information Processing Apparatus

3. Second Embodiment
4. Hardware Configuration
5. Conclusion

<1. Sight Line Detection and Calibration>

In recent years, sight line input has been performable in various information device. The sight line of the operator is to be detected for the sight line input, and various methods have been proposed as the sight line detection method.

For example, there is known the pupil-corneal reflection method, which conducts sight line detection of high accuracy with a low-cost system. In the pupil-corneal reflection method, the eyeball model is introduced to identify the sight line position in the three-dimensional space, and the three dimensional sight line vector is detected. The three dimensional vector calculated by this method is called the eye axis, and passes through the center of the eyeball.

In the meantime, there is a difference between the eye axis and the visual axis along which the operator actually looks at. Hence, when the sight line detection is executed by the pupil-corneal reflection method, the calibration of the sight line detection is to be executed. Although the dominant difference in the pupil-corneal reflection method is the difference between the eye axis and the visual axis, the personal parameters considered in the eyeball model (for example, the corneal curvature radius, etc) and the asphericity of the eyeball, the refraction at the surface of glasses, etc. are also to be corrected in the calibration as well.

Usually, the calibration displays on the display screen image some sort of marker, which is the proper point on the visual axis that the operator looks at (the calibration point), and calculates the relational expression in relation to the detected eye axis of the operator. In general, the detection accuracy is high near the calibration point, and therefore the calibration is executed better as the number of times of the calibration is larger. However, the process of the calibration forces the operator to perform a predetermined operation, which tends to increase the burden on the operator.

Also, if the calibration does not achieve the sight line detection that is sufficient for predetermined device operation, the operator does not operate the device comfortably. Also, even if the calibration is executed, an expected detection accuracy sometimes is not achieved depending on the operator, which may result in the predetermined device operation unable to perform.

In contrast, the information processing apparatus of an embodiment according to the present disclosure described in the following determines the detection accuracy of the sight line in the display screen image, and differentiates the display form of the display object displayed in the display screen image, depending on the determined detection accuracy. Thereby, by differentiating the display form of the display object depending on the detection accuracy of the sight line relative to the display screen image, the operation by the sight line is appropriately performed to the displayed display object.

## <2. First Embodiment>

### (2-1. Configuration of Information Processing Apparatus)

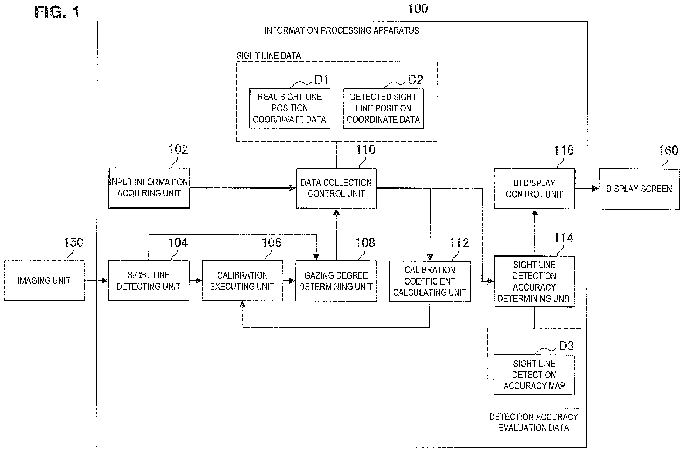

With reference to FIG. 1, description will be made of an example of the configuration of the information processing apparatus according to the first embodiment of the present disclosure. FIG. 1 is a block diagram illustrating an example of the function and configuration of the information processing apparatus according to the first embodiment of the present disclosure.

In the present embodiment, the information processing apparatus 100 is equipped in the inside of an information device such as a television. As illustrated in FIG. 1, the information device includes an imaging unit 150, and a display screen 160.

The imaging unit 150 is a camera having an imaging capturing sensor, for example. The imaging unit 150 is provided in the vicinity of the display screen 160, and is capable of capturing an operator such as a user gazing at the display screen 160 (specifically, the eye of the operator). The imaging unit 150 outputs the image capturing result to a sight line detecting unit 104 of the information processing apparatus 100. Note that, as far as the imaging unit 150 can capture an image of the eye of the operator, the imaging unit 150 may be provided separately from the display screen 160.

The display screen 160 displays various information. For example, the display screen 160 displays a display object for executing a function. The operator selects a display object displayed on the display screen 160, to execute the corresponding function. Here, the display object is a concept including an icon and a cursor, for example. The display screen 160 is provided integrally with the information device, but is not limited thereto. For example, the display screen 160 may have a configuration separated from the information device.

The information processing apparatus 100 detects the sight line of the user gazing at the display screen 160 via the imaging unit 150, and controls the display of the display object displayed on the display screen 160. As illustrated in FIG. 1, the information processing apparatus 100 includes an input information acquiring unit 102, the sight line detecting unit 104, a calibration executing unit 106, a gazing degree determining unit 108, a data collection control unit 110, a calibration coefficient calculating unit 112, a sight line detection accuracy determining unit 114, and a user interface (UI) display control unit 116.

### (Input Information Acquiring Unit 102)

The input information acquiring unit 102 acquires the information input to the display screen 160.

The input information acquiring unit 102 acquires, as the input information, the information of the touch position when the operator performs touch operation to the display screen 160, for example. The input information acquiring unit 102 outputs the acquired input information to the data collection control unit 110.

### (Sight Line Detecting Unit 104)

The sight line detecting unit 104 detects the sight line of the operator on the display screen 160, on the basis of the shot image capturing the sight line of the operator by the imaging unit 150. The sight line detecting unit 104 detects the sight line position on the display screen 160 in accordance with the pupil-corneal reflection method, for example. The sight line detecting unit 104 outputs the detection result to the calibration executing unit 106 and the gazing degree determining unit 108.

### (Calibration Executing Unit 106)

The calibration executing unit 106 executes the calibration of the sight line detection. Thereby, when the operator performs the sight line input, the error between the sight line estimated position detected by the sight line detecting unit 104 and the actual sight line position (i.e., the difference between the eye axis and the visual axis) is corrected. Also, the calibration executing unit 106 executes the calibration on the basis of the calibration coefficient (the correction coefficient) calculated by the calibration coefficient calculating unit 112.

### (Gazing Degree Determining Unit 108)

The gazing degree determining unit 108 determines the degree of the gazing to the display screen 160, with respect to the sight line of the operator detected by the sight line detecting unit 104. For example, when a predetermined time has passed while the sight line of the operator stops at one point on the display screen 160, the gazing degree determining unit 108 determines that the sight line of the operator gazes at the one point. The gazing degree determining unit 108 outputs the determined gazing degree to the data collection control unit 110.

### (Data Collection Control Unit 110)

The data collection control unit 110 collects the sight line data that is used in the measurement and the calibration of the sight line detection accuracy. Specifically, the data collection control unit 110 collects the coordinate data D1 of the sight line position (the sight line estimated position) detected by the sight line detecting unit 104, as the sight line data. Also, the data collection control unit 110 collects the coordinate data D2 of the real sight line position on the display screen 160 that the operator actually looks at, on the basis of the input information acquired by the input information acquiring unit 102.

Here, description will be made of three collection example (the first collection example to the third collection example), as the collection example of the real sight line position of the operator on the display screen 160.

(First Collection Example)

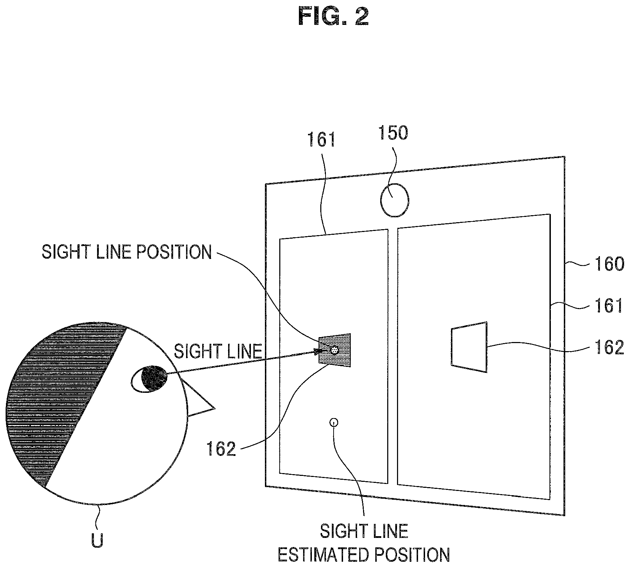

First, with reference to FIG. 2, description will be made of the first collection example of the coordinate data of the real sight line position on the display screen 160. FIG. 2 is a schematic diagram for describing the first collection example of the real sight line position on the display screen 160.

In the first collection example, sight line sensing regions 161 and UI display regions 162 are set on the display screen 160, as illustrated in FIG. 2. The sight line sensing region 161 is the region to sense the sight line of the operator U. In FIG. 2, the sight line sensing regions 161 are set at both of the left and right parts of the display screen 160. By providing the sight line sensing regions 161 in this manner, whether the operator U directs the sight line to the left or to the right of the display screen 160 is sensed. The sight line sensing region 161 is not displayed on the display screen 160. Note that the sight line sensing region 161 is not limited thereto, but may be displayed on the display screen 160.

The UI display region 162 is sufficiently smaller than the sight line sensing region 161, and is included in the sight line sensing region 161. The display object is displayed in the UI display region 162. In FIG. 2, the UI display regions 162 are set at the centers of the two sight line sensing regions 161, respectively. Note that the actual operation to the display object displayed on the display screen 160 is performed by the operation corresponding to the sight line sensing region 161 in which the sight line estimated position is present.

When the sight line estimated position calculated by the sight line detecting unit 104 stops at one of the sight line sensing regions 161 of the two sight line sensing regions 161 for a predetermined time or more, the data collection control unit 110 regards the real sight line position of the operator U, as the position of the display object in the sight line sensing region 161. Then, the data collection control unit 110 records the position coordinate of the display object, as the sight line of the operator position. At this, the sight line estimated position calculated by the sight line detecting unit 104 is also recorded.

Note that, when a display device of a glasses type, which is made by combining a head-mounted display device and a distance measuring device, is used, the position of the object superimposed in what is called augmented reality (AR) may be recorded as the real sight line position of the operator in the three dimension.

(Second Collection Example)

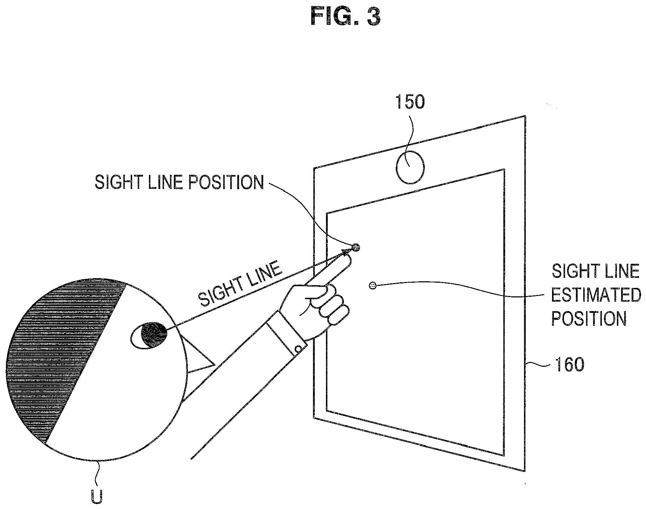

With reference to FIG. 3, description will be made of the second collection example of the coordinate data of the real sight line position on the display screen 160. FIG. 3 is a schematic diagram for describing the second collection example of the real sight line position on the display screen 160.

In the second collection example, the display screen 160 is a touch panel, and the operator U performs touch operation to the display screen 160. Here, the touch operation includes the operation in which the operator U directly touches the display screen 160 with a finger, and the operation by a touch pad.

In general, the operator is likely to gaze the touch position, when performing the touch operation. Therefore, the data collection control unit 110 regards the coordinate of the touch position at which the operator U performs the touch operation to the display screen 160, as the real sight line position of the operator U. Thereby, the sight line position is corrected to the touch position, which is away from the sight line estimated position by the sight line detecting unit 104.

Although in the above the touch operation is taken as an example for description, the operation is not limited thereto. For example, the above is applied to selection of the mouse cursor, text input, and the like. That is, the operator is likely to gaze the cursor when operating the cursor on the display screen 160 with a mouse, and therefore the cursor position is regarded as the real sight line position of the user.

(Third Collection Example)

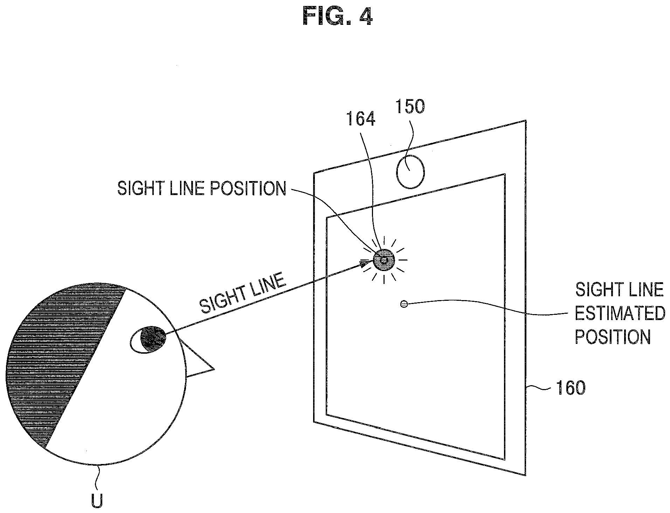

With reference to FIG. 4, description will be made of the third collection example of the coordinate data of the real sight line position on the display screen 160. FIG. 4 is a schematic diagram for describing the third collection example of the real sight line position on the display screen 160.

In the third collection example, the object that the operator is likely to gaze at (for convenience of description, referred to as the gaze object 164) is intentionally displayed on the display screen 160. Here, the display form of the gaze object 164 is, for example, a form displaying a blinking object, an object representing the face of a person, an object representing a logo, or the like, on a flat background.

In general, the operator is likely to gaze at the gaze object 164 displayed on the display screen 160, when looking at the display screen 160. Therefore, the data collection control unit 110 regards the display position of the gaze object 164 as the real sight line position of the operator U. Thereby, the sight line position is corrected to the display position of the gaze object 164, which is away from the sight line estimated position by the sight line detecting unit 104.

(Calibration Coefficient Calculating Unit 112)

The calibration coefficient calculating unit 112 calculates the calibration coefficient (the correction coefficient) on the basis of the data collected by the data collection control unit 110. The calibration coefficient calculating unit 112 outputs the calculation result to the calibration executing unit 106.

(Sight Line Detection Accuracy Determining Unit 114)

The sight line detection accuracy determining unit 114 determines the detection accuracy of the sight line detected by the sight line detecting unit 104. Specifically, the sight line detection accuracy determining unit 114 determines the detection accuracy of the sight line on the basis of the error (the sight line detection error) between the sight line position that is detected by the sight line detecting unit 104 and collected by the data collection control unit 110 (the sight line estimated position), and the real sight line position that the operator actually looks at.

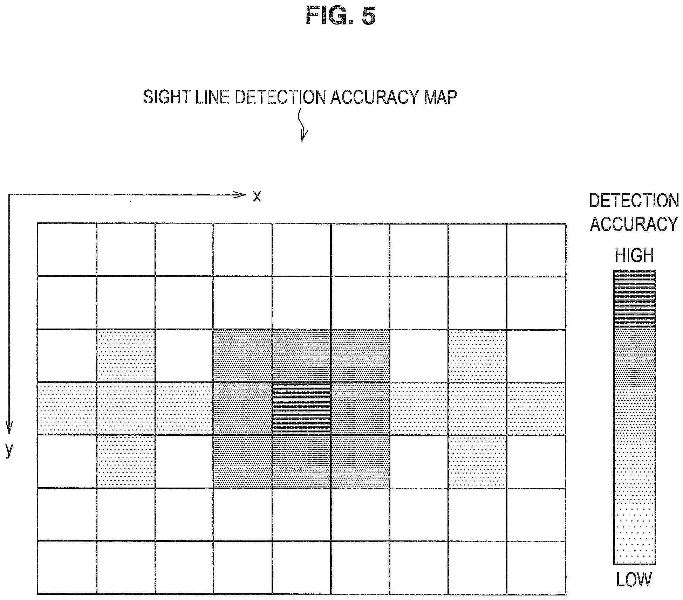

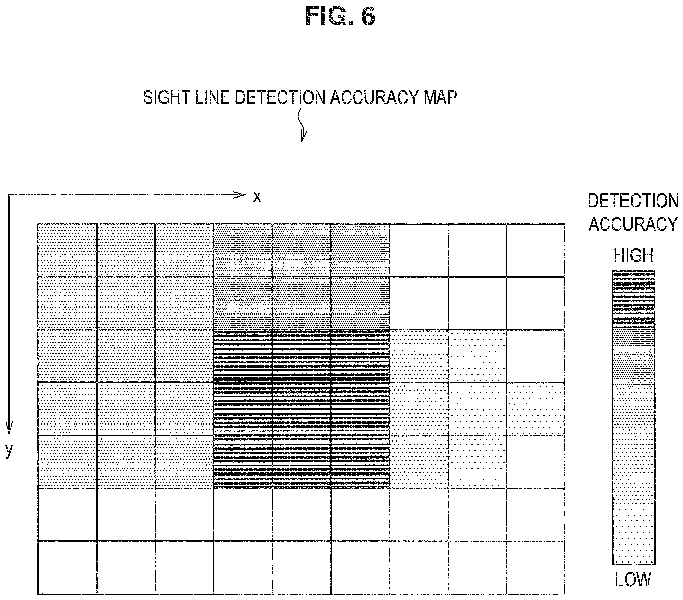

The sight line detection accuracy determining unit 114 according to the first embodiment determines the detection accuracy of the sight line on the display screen 160, using the sight line detection accuracy map which is the detection accuracy evaluation data D3. The sight line detection accuracy map includes the error between the real sight line position and the sight line estimated position, which is recorded therein. In the following, the sight line detection accuracy map will be described with reference to FIGS. 5 and 6.

FIGS. 5 and 6 is schematic diagrams illustrating an example of the sight line detection accuracy map according to the first embodiment. The sight line detection accuracy map is composed of a plurality of regions arrayed in x direction and y direction. The resolution of the sight line detection accuracy map is same as the resolution of the display screen 160. Note that the resolution of the sight line detection accuracy map is not limited thereto, but may be same as the maximum resolution of the sight line detection algorithm, or may be a value calculated by dividing the resolution of the display screen 160 by the size of the minimum object, for example. Also, in FIGS. 5 and 6, the sight line detection accuracy of the region that is colored in black is high.

The sight line detection accuracy determining unit 114 determines the sight line detection accuracy for each region in the sight line detection accuracy map. As illustrated in FIG. 5 and FIG. 6, the sight line detection accuracy varies in the sight line detection accuracy map. For example, in FIG. 5, the sight line detection accuracy of the center portion of the map is high, and the sight line detection accuracies at the left and right from the center portion is lower than the sight line detection accuracy of the center portion, and the sight line detection accuracies of other portions are further lower.

The sight line detection accuracy determining unit 114 determines a higher sight line detection accuracy, as the sight line detection error becomes smaller. Here, the sight line detection error is defined as the distance between the real sight line position and the sight line estimated position, for example. Note that the sight line detection error may be a value calculated by normalizing the distance between the real sight line position and the sight line estimated position. Also, when the three dimensional sight line vector is detected, the angle error may be used.

When the sight line detection error is larger than one for example, the value of the sight line detection accuracy is the reciprocal of the sight line detection error. Also, if the sight line detection error is a value that is normalized within a range from 0 to 1.0, the sight line detection error may be a value calculated by subtracting the sight line detection error from 1.0.

Note that the average error expected in the employed sight line detection algorithm is used as the initial value of the sight line detection error. For example, when the pupil-corneal reflection method is used, the dominant difference is the difference between the visual axis and the eye axis, and the difference amount in this case is on average approximately 5 degree. Also, when width W × height H (mm) of the display screen 160 and the distance Z (mm) of the display screen 160 from the operator are known, the initial value d is calculated by the below formula. Note that, when normalizing, the values calculated by dividing the respective sizes of width and height by both of width W and height H are used.

$$d = Z \times \tan(5.0 \times \pi/180)$$

The sight line detection accuracy determining unit 114 calculates the sight line detection accuracy for each region of the sight line detection accuracy map. Then, the sight line detection accuracy determining unit 114 records the calculated sight line detection accuracy. Note that, in the above, the sight line detection accuracy map is a two-dimensional map of x direction and y direction as illustrated in FIG. 5 but is not limited thereto. For example, the sight line detection accuracy map may be a three dimensional map of x direction, y direction, and z direction.

Also, the sight line detection accuracy determining unit 114 may determine the detection accuracy of the sight line, according to the number of times of the calibration by the calibration executing unit 106. Usually, the accuracy of the sight line detection has a tendency to become higher, as the number of times of the calibration increases. Therefore, the sight line detection accuracy determining unit 114 determines that the detection accuracy of the sight line is high when the number of times of the calibration is large, and determines that the detection accuracy of the sight line is low when the number of times of the calibration is small. Thereby, the detection accuracy of the sight line is simply determined.

(UI Display Control Unit 116)

The UI display control unit 116 differentiates the display form of the display object (the icon) displayed on the display screen 160, depending on the detection accuracy determined by the sight line detection accuracy determining unit 114. For example, the UI display control unit 116 differentiates at least one of the position, the size, and the shape of the display object displayed on the display screen 160, depending on the detection accuracy.

As is often the case, on the display screen 160, the sight line detection accuracy is not distributed evenly, but varies (refer to FIG. 5). Hence, the UI display control unit 116 differentiates the display form of the display object, depending on the distribution state of the sight line detection accuracy on the display screen 160.

For example, the UI display control unit 116 displays the display object on the display screen 160 in the region whose sight line detection accuracy is determined to be high. On the other hand, the UI display control unit 116 does not display the display object on the display screen 160 in the region whose sight line detection accuracy is determined to be low. Thereby, the operation by the sight line of the operator to the displayed display object is detected unfailingly.

Further, the UI display control unit 116 displays a plurality of display objects more densely, as the sight line detection accuracy becomes higher in the region on the display screen 160. When the sight line detection accuracy is high, the operation by the sight line to each display object is identified, even if a plurality of display objects are displayed densely. On the other hand, the UI display control unit 116 displays a plurality of display objects more sparsely, as the sight line detection accuracy becomes lower in the region on the display screen 160.

Also, the UI display control unit 116 differentiates the number of the display objects displayed on the display screen 160, depending on the sight line detection accuracy. For example, the UI display control unit 116 controls the display of the display objects, in such a manner that the number of the display objects when the sight line detection accuracy is high becomes larger than the number of the display objects when the sight line detection accuracy is low. When the sight line detection accuracy is high, the operation by the sight line of the operator to each display object is identified, even if a plurality of display objects are displayed.

Also, the UI display control unit 116 displays the display object more finely (in a smaller size), as the sight line detection accuracy becomes higher. In that case, the operation by the sight line of the operator to the display object is detected appropriately, even if the display object is displayed finely. On the other hand, the UI display control unit 116 displays the display object in a larger size, as the sight line detection accuracy becomes lower.

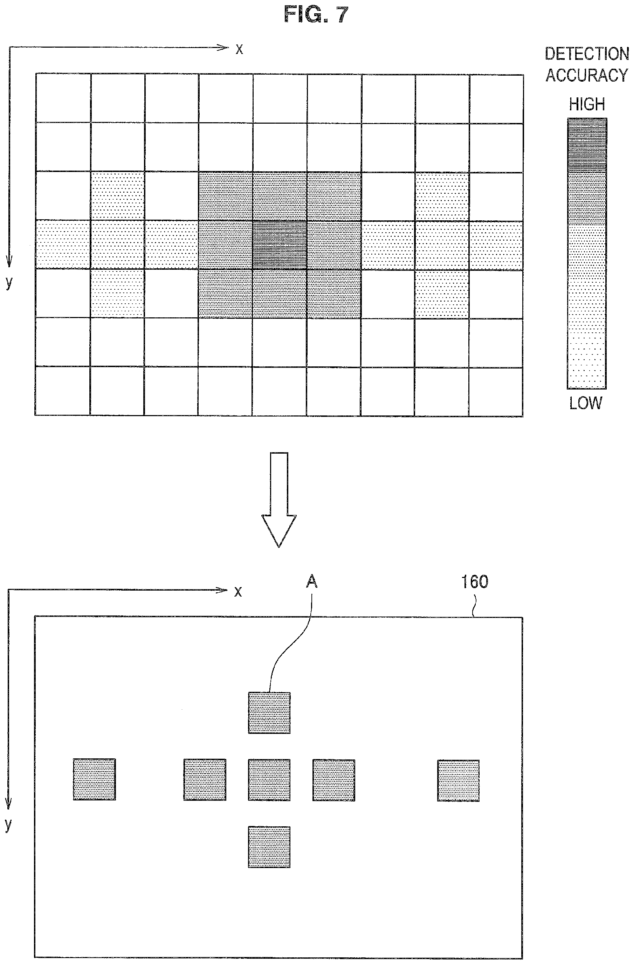

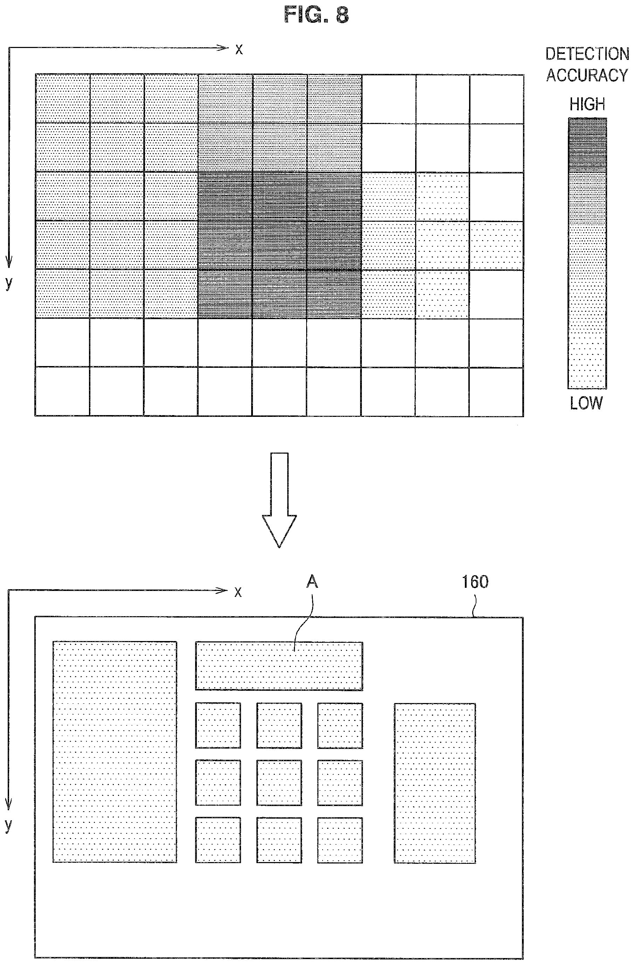

Here, with reference to FIGS. 7 and 8, description will be made of arrangement examples of the display objects (for example, the icons) according to the sight line detection accuracy map. Note that, in FIGS. 7 and 8, one display object is located in one region. Note that the arrangement is not limited thereto, but a plurality of display objects may be located in one region, or one display object may be located over a plurality of regions.

FIG. 7 is a diagram illustrating an arrangement example of the display objects according to the sight line detection accuracy map according to the first embodiment. The sight line detection accuracy map illustrated in FIG. 7 is the sight line detection accuracy map described in FIG. 5. As illustrated in FIG. 7, the display objects A are located in a clustered manner, in the region of the display screen 160 corresponding to the part where the sight line detection accuracy is high in the sight line detection accuracy map. Note that the sizes of the display objects A are same as each other.

FIG. 8 is a diagram illustrating an arrangement example of the display objects according to the sight line detection accuracy map according to the first embodiment. The sight line detection accuracy map illustrated in FIG. 8 is the sight line detection accuracy map described in FIG. 6. As illustrated in FIG. 8, the shape of the display object A located in the region of the display screen 160 corresponding to the part where the sight line detection accuracy is high in the sight line detection accuracy map is different from the shape of the display object A located in the region of the display screen 160 corresponding to the part where the sight line detection accuracy is low. Specifically, a large, rectangular display object A is located in the region corresponding to the part where the sight line detection accuracy is low, and a plurality of small, rectangular display objects A are located in the region corresponding to the part where the sight line detection accuracy is high.

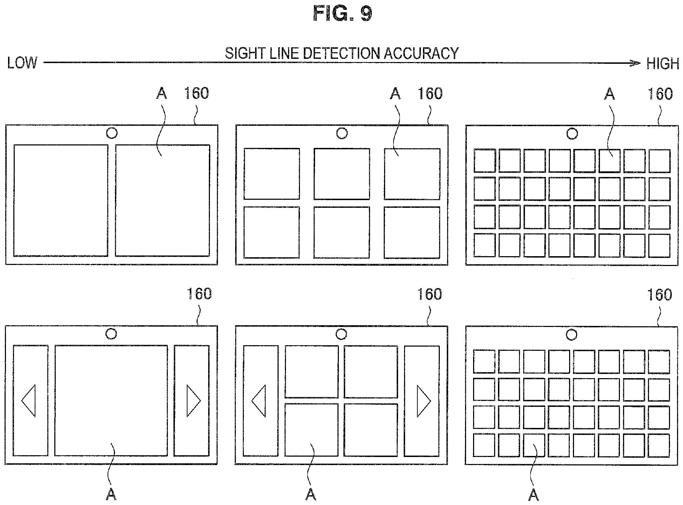

In FIGS. 7 and 8 described above, the arrangement example of the display objects A is illustrated with respect to a part of region in the entire display screen 160. On the other hand, the display objects may be located as illustrated in FIG. 9 in the entire display screen 160.

FIG. 9 is a schematic diagram illustrating the relationship between the sight line detection accuracy and the arrangement of the display object according to the first embodiment. As is understood from FIG. 9, the number of the display objects A located on the display screen 160 is small when the sight line detection accuracy is low, and the number of the display objects A located on the display screen 160 is large when the sight line detection accuracy is high. Also, as the sight line detection accuracy becomes higher, the shape of the display object A located on the display screen 160 becomes smaller.

Note that, in the above, description has been made of an example in which the information processing apparatus 100 is equipped in a television which is the information device, but the configuration is not limited thereto. For example, the information processing apparatus 100 may be equipped in a device such as a projector, a digital camera, and a head-mounted display.

(2-2. Operation of Information Processing Apparatus)

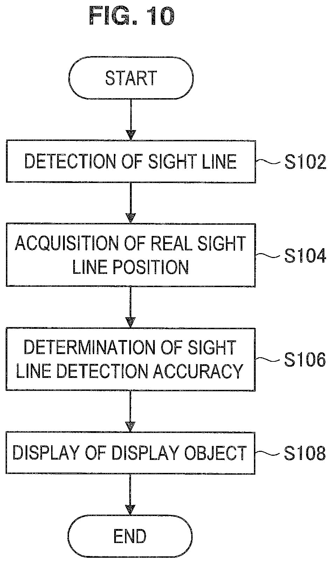

With reference to FIG. 10, description will be made of an example of the operation of the information processing apparatus 100 having the configuration described above. FIG. 10 is a flowchart illustrating an example of the operation of the information processing apparatus 100 according to the first embodiment of the present disclosure.

The process illustrated in FIG. 10 is realized by the CPU of the information processing apparatus 100 which executes a program stored in the ROM. Note that the executed program may be stored in a recording medium such as a CD (Compact Disk), a DVD (Digital Versatile Disk), a memory card, or may be downloaded from a server or the like via the Internet.

The flowchart of FIG. 10 starts from a situation where the operator looks at the display screen 160. First, the sight line detecting unit 104 detects the sight line of the operator looking at the display screen 160 via the imaging unit 150 (step S102). The detected result is collected by the data collection control unit 110 as an operator's sight line estimated position.

Next, the data collection control unit 110 acquires the operator's real sight line position (step S104). For example, the data collection control unit 110 acquires the touch position at which the operator has performed touch operation to the display screen 160, as the real sight line position.

Next, the sight line detection accuracy determining unit 114 determines the detection accuracy of the sight line detected by the sight line detecting unit 104 (step S106). For example, the sight line detection accuracy determining unit 114 determines the detection accuracy of the sight line on the basis of the error (the sight line detection error) between the sight line estimated position and the operator's real sight line position.

Next, the UI display control unit 116 displays the display object on the display screen 160, on the basis of the determined sight line detection accuracy (step S108). At this, the UI display control unit 116 differentiates the display form of the display object, depending on the sight line detection accuracy. For example, the UI display control unit 116 displays the display object on the display screen 160 in the region where the sight line detection accuracy is high. Thereby, the operation by the sight line of the operator to the display object displayed on the display screen 160 is accurately detected.

<3. Second Embodiment>

In the first embodiment described above, description has been made of the change in the display form of the display object displayed on the display screen 160 when the operator performs the sight line input, in response to the sight line detection accuracy. In contrast, in the second embodiment, the display form of the display object displayed on the display screen 160 is changed when the data for the calibration is acquired, in response to the sight line detection accuracy.

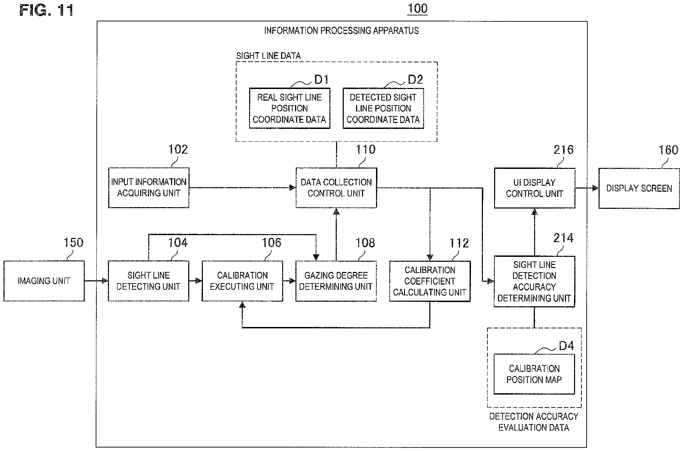

FIG. 11 is a block diagram illustrating an example of the function and configuration of the information processing apparatus according to the second embodiment of the present disclosure. In the second embodiment, the sight line detection accuracy determining unit 214 and the UI display control unit 216 are different in configuration from those of the first embodiment. The rest of configuration is same as that of the first embodiment, and therefore the detailed description will be omitted.

The sight line detection accuracy determining unit 214 determines the detection accuracy of the sight line detected by the sight line detecting unit 104. Then, the sight line detection accuracy determining unit 214 determines the position at which the data for the calibration is acquired on the display screen 160, using the calibration position map which is the detection accuracy evaluation data D4.

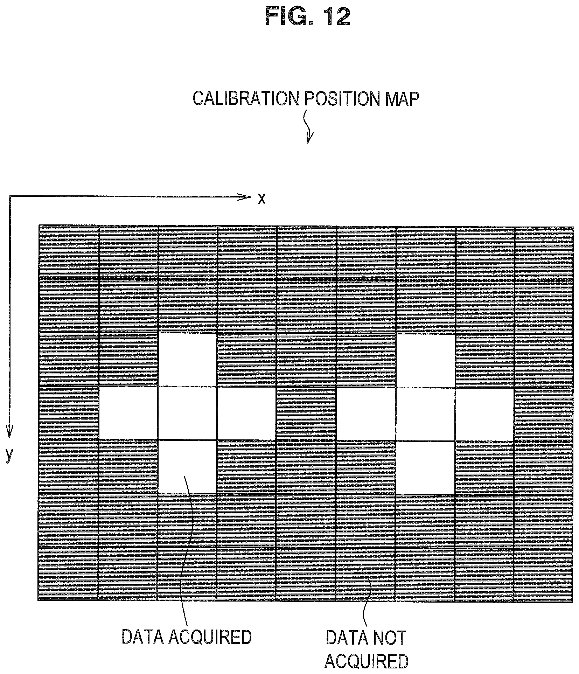

FIG. 12 is a schematic diagram illustrating an example of the calibration position map according to the second embodiment. The calibration position map is composed of a plurality of regions arrayed in x direction and y direction as illustrated in FIG. 12. The resolution of the calibration position map is same as the resolution of the display screen 160.

The sight line detection accuracy determining unit 214 determines the presence or absence of the acquired data for calibration at each region in the calibration position map. In FIG. 12, the region for which the data for calibration is acquired is colored in white, and the region for which the data for calibration is not acquired is colored in black. Note that the region for which the data for calibration is acquired has a high sight line detection accuracy, and the region for which the data for calibration is not acquired has a low sight line detection accuracy.

The UI display control unit 216 displays the display object in the region where the calibration is not executed on the display screen 160, in response to the calibration position map. Specifically, when collecting the data for the calibration, the UI display control unit 216 displays the display object only in the region where the calibration is not executed on the display screen 160. Thereby, the calibration executing unit 106 executes the calibration on the basis of the display object intentionally displayed in the region where the calibration is not executed on the display screen 160. As a result, the detection accuracy of the region where the calibration has not been executed is promptly enhanced.

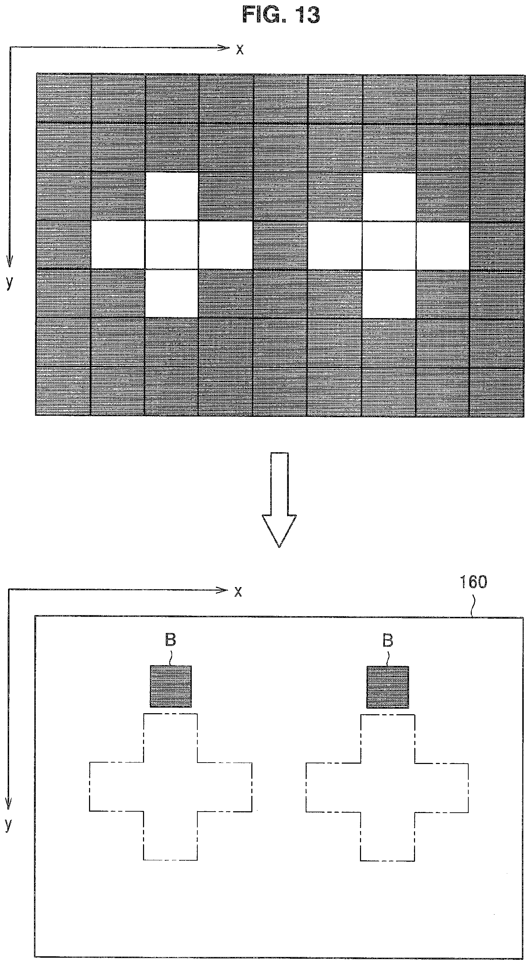

FIG. 13 is a diagram illustrating an arrangement example of the display objects according to the calibration position map according to the second embodiment. The calibration position map illustrated in FIG. 13 is the calibration position map described in FIG. 12. As illustrated in FIG. 13, the display objects B are displayed in the region of the display screen 160 corresponding to the region where the calibration is not executed in the calibration position map. Note that, in FIG. 13, only two display objects B are displayed on the display screen 160, but the display objects are not limited thereto. For example, three or more display objects B may be displayed.

In the above, the UI display control unit 216 arranges the display object B only in the region where the calibration is not executed, but is not limited thereto. For example, the UI display control unit 216 may display the display object B on the display screen 160 in the region whose detection accuracy is determined to be low. Thereby, the detection accuracy of the region is promptly enhanced, by intentionally displaying the display object in the region where the detection accuracy is low, and executing the calibration.

<4. Hardware Configuration>

The operation by the information processing apparatus 100 described above is realized by the cooperation of the hardware configuration and the software of the information processing apparatus 100.

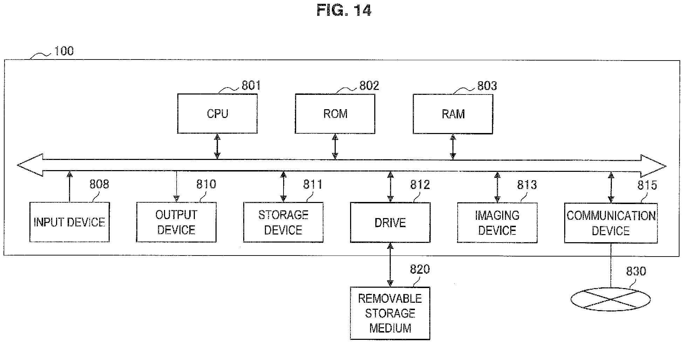

FIG. 14 is an explanatory diagram illustrating the exemplary hardware configuration of the information processing apparatus 100. As illustrated in FIG. 14, the information processing apparatus 100 includes a CPU (Central Processing Unit) 801, a ROM (Read Only Memory) 802, a RAM (Random Access Memory) 803, an input device 808, an output device 810, a storage device 811, a drive 812, an imaging device 813, and a communication device 215.

The CPU 801 functions as an operation processor and a control device, and controls the overall operation of the information processing apparatus 100 in accordance with various types of programs. Also, the CPU 801 may be a microprocessor. The ROM 802 stores programs, operation parameters, and other data used by the CPU 801. The RAM 803 temporarily stores the programs used in the execution of the CPU 801, the parameters that change as appropriate in the execution of the programs, and other data. They are connected to each other by a host bus configured from a CPU bus and others.

The input device 808 is composed of a mouse, a keyboard, a touch panel, a button, a microphone, input means for the user to input information such as a switch and a lever, an input control circuit that generates an input signal on the basis of input by the user and outputs the input signal to the CPU 801, and others. The user of the information processing apparatus 100 operates the input device 808, in order to input the various types of data to the information processing apparatus 100 and instruct the processing operation.

The output device 810 includes a display device, such as for example a liquid crystal display (LCD) device, an organic light emitting diode (OLED) device, and a lamp. Further, the output device 810 includes an audio output device such as a speaker and a headphone. For example, the display device displays a captured image, a generated image, and the like. On the other hand, the audio output device converts sound data to sound and outputs the sound.

The storage device 811 is a device for data storage which is configured as one example of the storage unit of the information processing apparatus 100 according to the present embodiment. The storage device 811 may include a storage medium, a recording device that records data on a storage medium, a reading device that reads out data from a storage medium, a deleting device that deletes data recorded on a storage medium, and a like. The storage device 811 stores programs and various types of data executed by the CPU 801.

The drive 812 is a storage medium reader/writer, which is provided either inside or outside the information processing apparatus 100. The drive 812 reads out the information recorded on a removable storage medium 820 such as a magnetic disk, an optical disc, a magneto-optical disk, or a semiconductor memory mounted thereon, and output to the RAM 803. Also, the drive 812 is capable of writing information on the removable storage medium 820.

The imaging device 813 includes an imaging optical system such as a photographing lens and a zoom lens that condenses light and a signal conversion element such as a charge coupled device (CCD) and a complementary metal oxide semiconductor (CMOS). The imaging optical system condenses light emitted from a subject to form an image of the subject on a signal conversion unit. The signal conversion element converts the formed image of the subject into an electric image signal.

The communication device 815 is, for example, a communication interface configured by a communication device for connecting to the network 830 and other devices. Also, the communication device 815 may be a wireless LAN (Local Area Network) compatible communication device, a LTE (Long Term Evolution) compatible communication device, or a wire communication device that communicates via wire.

Note that, the network 830 is a wired or wireless transmission channel of the information transmitted from a device connected to the network 830. For example, the network 830 may include public line networks such as the Internet, a telephone line network, a satellite communication network, various types of local area networks (LAN) including the Ethernet (registered trademark), wide area networks (WAN), and others. Also, the network 830 may include dedicated line networks such as IP-VPN (Internet Protocol-Virtual Private Network).

<5. Conclusion>

The information processing apparatus 100 described above determines the detection accuracy of the sight line on the display screen 160, and differentiates the display form of the display object displayed on the display screen 160, depending on the determined detection accuracy (refer to FIG. 7, FIG. 8). For example, the information processing apparatus 100 differentiates one of the position, the size, and the shape of the display object displayed on the display screen 160.

Thereby, even if the display screen 160 has a variation in the sight line detection accuracy for example, the position, the size, the shape, etc of the display object are set in such a manner that the display object is positioned in the region where the sight line detection accuracy is high on the display screen 160. Hence, the sight line of the operator to the display object is appropriately detected, which allows the sight line input to be performed appropriately.

Note that, in the above, the information processing apparatus 100 is equipped in the information device having the display screen 160, but is not limited thereto. The information processing apparatus 100 may be provided in a server capable of communicating with the information device via a network.

Also, in the above, description has been made of differentiating the display form of the display object displayed on the display screen 160, depending on the detection accuracy of the sight line, but the present disclosure is not limited thereto. For example, in the device that detects the finger pointing of the operator to the display screen or the like, the display form of the display object displayed on the display screen 160 may be differentiated depending on the detection accuracy of the finger pointing. Thereby, the operation by the finger pointing is performed appropriately, in line with the detection accuracy of the finger pointing to the display screen.

It should be understood by those skilled in the art that various modifications, combinations, sub-combinations and alterations may occur depending on design requirements and other factors insofar as they are within the scope of the appended claims. The steps illustrated in the flowcharts in the above-described embodiment naturally include processes performed in the described and chronological order, and further include processes that are not necessarily performed in chronological order, but are also performed in parallel or are individually performed. It is also possible to change the order as necessary even in the steps for chronologically performing the processes.

A process performed by the information processing apparatus described in the present specification may be realized by using any one of software, hardware, and a combination of software and hardware. A program included in software is stored in advance in, for example, a storage medium that is built in or externally provided to each apparatus. When executed, programs are each read out by, for example, Random Access Memory (RAM), and executed by a processor such as a CPU.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

**Claims**

1. An information processing apparatus comprising:

   a sight line detecting unit (104) configured to detect a sight line of an operator on a display screen (160); **characterized by**
   a detection accuracy determining unit (114, 214) configured to determine a detection accuracy of the sight line detected by the sight line detecting unit (104); and
   a display control unit (116, 216) configured to differentiate a display form of a display object displayed on the display screen (160), depending on the detection accuracy determined by the detection accuracy determining unit (114, 214).

2. The information processing apparatus according to claim 1, wherein

   the display control unit (116, 216) differentiates at least one of a position, a size, and a shape of the display object displayed on the display screen (160), depending on the detection accuracy.

3. The information processing apparatus according to claim 1, wherein

   the display control unit (116, 216) displays the display object on the display screen (160) in a region whose detection accuracy is determined to be high.

4. The information processing apparatus according to claim 3, wherein

   the display control unit (116, 216) displays a plurality of display objects more densely, as the detection accuracy becomes higher in the region on the display screen (160).

5. The information processing apparatus according to claim 1, wherein

   the display control unit (116, 216) displays the display object on the display screen (160) in a region whose detection accuracy is determined to be low.

6. The information processing apparatus according to claim 5, further comprising

a calibration executing unit (106) configured to execute calibration of sight line detection, and wherein the display control unit (116, 216) displays the display object on the display screen (160) in the region where the calibration is not executed.

7. The information processing apparatus according to claim 6, wherein

the calibration executing unit (106) executes the calibration on the basis of the display object displayed on the display screen (160) by the display control unit (116, 216).

8. The information processing apparatus according to claim 1, wherein

the display control unit (116, 216) differentiates a number of display objects displayed on the display screen (160), depending on the detection accuracy.

9. The information processing apparatus according to claim 8, wherein

the display control unit (116, 216) displays the display object more finely, as the detection accuracy is higher.

10. The information processing apparatus according to claim 1, further comprising

a calibration executing unit (106) configured to execute calibration of sight line detection, and wherein the detection accuracy determining unit (114, 214) determines a detection accuracy of the sight line, according to a number of times of the calibration by the calibration executing unit (106).

11. An information processing method comprising:

detecting (S102) a sight line of an operator on a display screen (160); **characterized by** determining (S106) a detection accuracy of the detected sight line; and differentiating (S108) a display form of a display object displayed on the display screen (160), depending on the determined detection accuracy.

12. A program for causing a computer to execute:

detecting (S102) a sight line of an operator on a display screen; **characterized by** determining (S106) a detection accuracy of the detected sight line; and differentiating (S108) a display form of a display object displayed on the display screen, depending on the determined detection accuracy.

**Patentansprüche**

1. Informationsverarbeitungsvorrichtung, umfassend:

eine Sichtlinienerkennungseinheit (104), die dafür ausgelegt ist, eine Sichtlinie eines Bedieners auf einem Anzeigeschirm (160) zu erkennen; **gekennzeichnet durch** eine Erkennungsgenauigkeit-Bestimmungseinheit (114, 214), die dafür ausgelegt ist, eine Erkennungsgenauigkeit der Sichtlinie, die von der Sichtlinienerkennungseinheit (104) erkannt wurde, zu bestimmen; und eine Anzeigesteuereinheit (116, 216), die dafür ausgelegt ist, eine Anzeigeform eines Anzeigeobjekts zu unterscheiden, das auf dem Anzeigeschirm (160) angezeigt wird, abhängig von der Erkennungsgenauigkeit, die von der Erkennungsgenauigkeit-Bestimmungseinheit (114, 214) bestimmt wurde.

2. Informationsverarbeitungsvorrichtung gemäß Anspruch 1, wobei die Anzeigesteuereinheit (116, 216) eine Position und/oder eine Größe und/oder eine Form des auf dem Anzeigeschirm (160) angezeigten Anzeigeobjekts unterscheidet, abhängig von der Erkennungsgenauigkeit.

3. Informationsverarbeitungsvorrichtung gemäß Anspruch 1, wobei die Anzeigesteuereinheit (116, 216) das Anzeigeobjekt auf dem Anzeigeschirm (160) in einem Bereich anzeigt, dessen Erkennungsgenauigkeit als hoch bestimmt wird.

4. Informationsverarbeitungsvorrichtung gemäß Anspruch 3, wobei die Anzeigesteuereinheit (116, 216) mehrere Anzeigeobjekte dichter anzeigt, je höher die Erkennungsgenauigkeit in dem Bereich auf dem Anzeigeschirm (160) wird.

5. Informationsverarbeitungsvorrichtung gemäß Anspruch 1, wobei die Anzeigesteuereinheit (116, 216) das Anzeigeobjekt auf dem Anzeigeschirm (160) in einem Bereich anzeigt, dessen Erkennungsgenauigkeit als niedrig bestimmt wird.

6. Informationsverarbeitungsvorrichtung gemäß Anspruch 5, ferner umfassend

eine Kalibrierungsausführungseinheit (106), die dafür ausgelegt ist, eine Kalibrierung der Sichtlinienerkennung auszuführen,
und
wobei die Anzeigesteuereinheit (116, 216) das Anzeigeobjekt auf dem Anzeigeschirm (160) in dem Bereich anzeigt, in dem die Kalibrierung nicht ausgeführt wird.

7. Informationsverarbeitungsvorrichtung gemäß Anspruch 6, wobei
die Kalibrierungsausführungseinheit (106) die Kalibrierung auf der Basis des von der Anzeigesteuereinheit (116, 216) auf dem Anzeigeschirm (160) angezeigten Anzeigeobjekts ausführt.

8. Informationsverarbeitungsvorrichtung gemäß Anspruch 1, wobei
die Anzeigesteuereinheit (116, 216) eine Anzahl von auf dem Anzeigeschirm (160) angezeigten Anzeigeobjekten unterscheidet, abhängig von der Erkennungsgenauigkeit.

9. Informationsverarbeitungsvorrichtung gemäß Anspruch 8, wobei
die Anzeigesteuereinheit (116, 216) das Anzeigeobjekt feiner anzeigt, je höher die Erkennungsgenauigkeit ist.

10. Informationsverarbeitungsvorrichtung gemäß Anspruch 1, ferner umfassend
eine Kalibrierungsausführungseinheit (106), die dafür ausgelegt ist, eine Kalibrierung der Sichtlinienerkennung auszuführen, und
wobei die Erkennungsgenauigkeit-Bestimmungseinheit (114, 214) eine Erkennungsgenauigkeit der Sichtlinie entsprechend einer Anzahl der Kalibrierungen durch die Kalibrierungsausführungseinheit (106) bestimmt.

11. Informationsverarbeitungsverfahren, umfassend:

Erkennen (S102) einer Sichtlinie eines Bedieners auf einem Anzeigeschirm (160); **gekennzeichnet durch** Bestimmen (S106) einer Erkennungsgenauigkeit der erkannten Sichtlinie; und
Unterscheiden (S108) einer Anzeigeform eines auf dem Anzeigeschirm (160) angezeigten Anzeigeobjekts, abhängig von der bestimmten Erkennungsgenauigkeit.

12. Programm, das bewirkt, dass ein Computer ausführt:

Erkennen (S102) einer Sichtlinie eines Bedieners auf einem Anzeigeschirm; **gekennzeichnet durch** Bestimmen (S106) einer Erkennungsgenauigkeit der erkannten Sichtlinie; und

Unterscheiden (S108) einer Anzeigeform eines auf dem Anzeigeschirm angezeigten Anzeigeobjekts, abhängig von der bestimmten Erkennungsgenauigkeit.

## Revendications

1. Appareil de traitement d'informations comprenant :

une unité de détection de ligne de visée (104) configurée pour détecter une ligne de visée d'un opérateur sur un écran d'affichage (160) ; **caractérisé par**
une unité de détermination de précision de détection (114, 214) configurée pour déterminer une précision de détection de la ligne de visée détectée par l'unité de détection de ligne de visée (104) ; et
une unité de contrôle d'affichage (116, 216) configurée pour distinguer une forme d'affichage d'un objet d'affichage affiché sur l'écran d'affichage (160), en fonction de la précision de détection déterminée par l'unité de détermination de précision de détection (114, 214).

2. Appareil de traitement d'informations selon la revendication 1, dans lequel
l'unité de contrôle d'affichage (116, 216) distingue au moins un élément parmi une position, une taille et une forme de l'objet d'affichage affiché sur l'écran d'affichage (160), en fonction de la précision de détection.

3. Appareil de traitement d'informations selon la revendication 1, dans lequel
l'unité de contrôle d'affichage (116, 216) affiche l'objet d'affichage sur l'écran d'affichage (160) dans une région dont la précision de détection est déterminée comme étant élevée.

4. Appareil de traitement d'informations selon la revendication 3, dans lequel
l'unité de contrôle d'affichage (116, 216) affiche une pluralité d'objets d'affichage de façon plus dense, lorsque la précision de détection devient plus élevée dans la région sur l'écran d'affichage (160).

5. Appareil de traitement d'informations selon la revendication 1, dans lequel
l'unité de contrôle d'affichage (116, 216) affiche l'objet d'affichage sur l'écran d'affichage (160) dans une région dont la précision de détection est déterminée comme étant faible.

6. Appareil de traitement d'informations selon la revendication 5, comprenant en outre
une unité d'exécution d'étalonnage (106) configurée pour exécuter un étalonnage de détection de ligne de visée, et

dans lequel l'unité de contrôle d'affichage (116, 216) affiche l'objet d'affichage sur l'écran d'affichage (160) dans la région où l'étalonnage n'est pas exécuté.

7. Appareil de traitement d'informations selon la revendication 6, dans lequel

l'unité d'exécution d'étalonnage (106) exécute l'étalonnage sur la base de l'objet d'affichage affiché sur l'écran d'affichage (160) par l'unité de contrôle d'affichage (116, 216).

8. Appareil de traitement d'informations selon la revendication 1, dans lequel

l'unité de contrôle d'affichage (116, 216) distingue un nombre d'objets d'affichage affichés sur l'écran d'affichage (160), en fonction de la précision de détection.

9. Appareil de traitement d'informations selon la revendication 8, dans lequel

l'unité de contrôle d'affichage (116, 216) affiche l'objet d'affichage plus finement, lorsque la précision de détection est plus élevée.

10. Appareil de traitement d'informations selon la revendication 1, comprenant en outre

une unité d'exécution d'étalonnage (106) configurée pour exécuter un étalonnage de détection de ligne de visée, et

dans lequel l'unité de détermination de précision de détection (114, 214) détermine une précision de détection de la ligne de visée, en fonction d'un nombre de fois que l'étalonnage est exécuté par l'unité d'exécution d'étalonnage (106).

11. Procédé de traitement d'informations comprenant :

la détection (S102) d'une ligne de visée d'un opérateur sur un écran d'affichage (160) ; **caractérisé par**
la détermination (S106) d'une précision de détection de la ligne de visée détectée ; et
la distinction (S108) d'une forme d'affichage d'un objet d'affichage affiché sur l'écran d'affichage (160), en fonction de la précision de détection déterminée.

12. Programme destiné à faire exécuter par un ordinateur :

la détection (S102) d'une ligne de visée d'un opérateur sur un écran d'affichage ; **caractérisé par**
la détermination (S106) d'une précision de détection de la ligne de visée détectée ; et

la distinction (S108) d'une forme d'affichage d'un objet d'affichage affiché sur l'écran d'affichage, en fonction de la précision de détection déterminée.

FIG. 1

# FIG. 2

SIGHT LINE POSITION

SIGHT LINE

162

U

SIGHT LINE
ESTIMATED POSITION

161  150

160
161
162

# FIG. 3

150

SIGHT LINE POSITION

SIGHT LINE

SIGHT LINE
ESTIMATED
POSITION

160

U

# FIG. 4

# FIG. 5

SIGHT LINE DETECTION ACCURACY MAP

# FIG. 6

SIGHT LINE DETECTION ACCURACY MAP

# FIG. 7

DETECTION
ACCURACY

HIGH

LOW

# FIG. 8

# FIG. 9

SIGHT LINE DETECTION ACCURACY

LOW ⟶ HIGH

# FIG. 10

START

↓

DETECTION OF SIGHT LINE — S102

↓

ACQUISITION OF REAL SIGHT LINE POSITION — S104

↓

DETERMINATION OF SIGHT LINE DETECTION ACCURACY — S106

↓

DISPLAY OF DISPLAY OBJECT — S108

↓

END

FIG. 11

<u>100</u>

INFORMATION PROCESSING APPARATUS

SIGHT LINE DATA

D1
REAL SIGHT LINE POSITION COORDINATE DATA

D2
DETECTED SIGHT LINE POSITION COORDINATE DATA

102
INPUT INFORMATION ACQUIRING UNIT

110
DATA COLLECTION CONTROL UNIT

216
UI DISPLAY CONTROL UNIT

160
DISPLAY SCREEN

150
IMAGING UNIT

104
SIGHT LINE DETECTING UNIT

106
CALIBRATION EXECUTING UNIT

108
GAZING DEGREE DETERMINING UNIT

112
CALIBRATION COEFFICIENT CALCULATING UNIT

214
SIGHT LINE DETECTION ACCURACY DETERMINING UNIT

D4
CALIBRATION POSITION MAP

DETECTION ACCURACY EVALUATION DATA

24

# FIG. 12

CALIBRATION POSITION MAP

DATA ACQUIRED          DATA NOT
                       ACQUIRED

# FIG. 13

**FIG. 14**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012065781 A
- US 20100165093 A1